# EUROPEAN PATENT SPECIFICATION

(11) **EP 0 353 035 B1**
(45) Date of publication and mention of the grant of the patent: **13.04.1994**
(21) Application number: 89307572.1
(22) Date of filing: 25.07.1989
(51) Int. Cl.: G01V 3/10

(54) **Foreign matter detector**
Fremdstoffdetektor
Détecteur de matière étrangére

(30) Priority: 26.07.1988 JP 185771/88
(43) Date of publication of application: 31.01.1990
(73) Proprietor: YAMATO SCALE CO., LTD., Akashi 673 (JP)
(72) Inventor: Inoue, Shinichi, Tarumi-ku Kobe 655 (JP); Nakayama, Kazuo, Akashi 673 (JP)
(74) Representative: Burke, Steven David

(56) References cited:
- WO-A-85/00122
- WO-A-88/03273
- US-A- 4 690 284

## Description

### Background of the Invention

This invention relates to a detector for detecting in food products, pharmaceutical products, etc. the presence of materials such as metals, which must not be present in the product and which have a different quality from the inherent or standard quality of the actual product.

For manufacturers of food products, etc., the presence of foreign matter in raw materials could cause damage to processing equipment. Also, the presence of foreign matter in finished products poses problems with regard to health and safety of the products. For this reason, detectors have long been used for inspection at the point where raw materials for such products are supplied to processing equipment and for inspection at the shipping point of wrapped finished products in order to find any foreign matter.

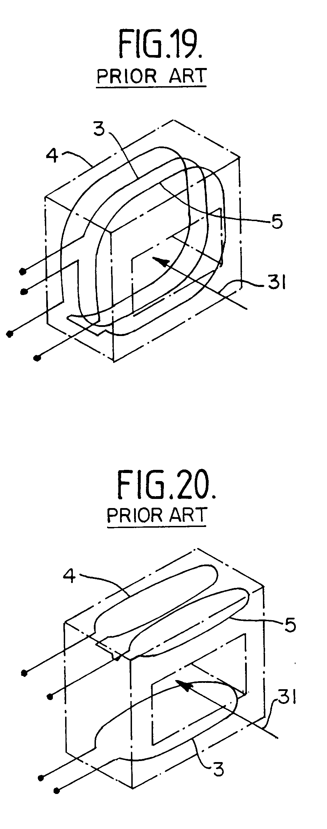

This type of conventional detector includes an electromagnetic transducer as shown in Fig. 19 or 20, which is essentially the same as a differential transformer. The transducer has a primary or excitation coil 3 generating an alternating electromagnetic field when a high-frequency electrical current is supplied, and a pair of secondary or detection coils 4 and 5 electromagnetically connected to the coil 3.

The secondary coils 4 and 5 are wound in opposite directions from each other and interconnected in series so that they operate differentially. The voltages or currents induced in the secondary coils cancel each other out or offset each other. This forms means for detecting the difference in the signals induced in the secondary coils.

In Fig. 19, the primary coil 3 is wound between and coaxially with the secondary coils 4 and 5. In Fig. 20, the primary coil is wound in parallel planes with the secondary coils.

The transducer utilizes the following phenomena which occur when an object being inspected is passed through the magnetic field in the direction 31.

If the object contains iron, the magnetic flux density will increase. The induced voltage of the secondary coil 5 adjacent the passing object will first become higher than that of the other secondary coil 4. If the object contains a nonferrous metal, the eddy current occurring in the metal will cause a loss of the lines of magnetic force. As a result, the induced voltage of the secondary coil 5 will first become lower than that of secondary coil 4.

Some food products may contain water or salt which may generate a relatively large signal, for reasons similar to those in the case of nonferrous metal, even though the products contain no foreign matter. This signal represents the product characteristics of the material, which are called "material effect".

If ferrous or nonferrous foreign matter is contained in these materials, the combination of the signal from this foreign matter and the product characteristics result in a composite signal.

If the foreign matter is small, the signal resulting from it will be small, and there is little difference between the signal generated by the product characteristics of the product itself and the combination of this signal and that caused by the foreign matter. This makes it difficult to detect the foreign matter.

It is in consideration of problems such as this that detectors such as that described in Japanese Patent Provisional Publication SHO.57-198880 have been proposed.

In the publication, the oscillation signal from an oscillator is supplied via a phase shifter to a transducer 4, which outputs a differential signal when an object passes through the transducer. This output signal is detected by a first chopper synchronized with the oscillation signal to obtain an in-phase chopped signal, and by a second chopper having a phase difference of 90 degrees from the oscillation signal to obtain a quadrature chopped signal. Each chopped signal is filtered and independently compared by a level comparator.

With this detector, to detect foreign matter in products having material effect, by adjusting one of the choppers to the phase at which the influence of the material effect is minimized (the phase 90 degrees from the phase angle at which the material effect is maximized), a detection signal with good sensitivity to the foreign matter can be obtained.

However, in order to reduce the material effect value to a level one-tenth or less that of the maximum value, it is theoretically necessary to keep the allowable error angle of the phase adjustment within approximately 6 degrees from the optimum phase angle. In other words, for the actual detection of foreign matter, in order to limit the material effect value to a level which does not influence practical use, for example, to a level within 3% of the maximum material effect value, it is necessary for the allowable error angle of the phase adjustment to be within approximately 1.8 degrees. Thus, precise trial-and-error adjustments are required in order to detect foreign matter in products having a large material effect.

In addition, for the level setting of the level comparator which will be explained later, it is necessary to adjust the sensitivity or gain to obtain an appropriate level corresponding to the phase adjustment just described. Thus, for this detector, the operator is required to perform skilled trial-and-error adjustments for the setting of the two variables of the phase adjustment and the sensitivity adjustment.

In addition, even if the detector is adjusted as described above, it is necessary to give a large reference level in advance for offsetting the material effect for foreign matter producing a signal in the same direction as that of the material effect. Consequently, in this phase direction, the detector is used in a condition in which the sensitivity has been sharply reduced. Consequently, less detection effectiveness can be expected for metals and other foreign matter in this phase direction.

Published International Patent Application No. WO-A-8 803 273 describes a device for detecting the presence of metal or other contaminants in a food product by generating a field vector indicative of electromagnetic properties of the Product and comparing this field vector to a range of vectorial values. The range is defined by a maximum amplitude value, a maximum angle value and a minimum angle value.

U.S. Patent No. US-A-4 690 284 describes a device for automatically sensing and positioning objects in automated manufacturing. As in the above-referenced application, electromagnetic signals are produced which define a vector quantity having two independent degrees of freedom, such as amplitude and phase. The value of each vector component is compared with a respective previously stored value.

In consideration of the conditions described above, it would be desirable to provide a detector for detecting the presence of metals and other foreign matter which does not require the operator to perform skilled trial-and-error adjustments such as the two factors of the phase adjustment and the sensitivity adjustment, and which is capable of detecting with good sensitivity foreign matter having a phase direction the same as or close to that of the material effect.

### Summary of the Invention

In accordance with the present invention there is provided a detector for detecting foreign materials in an object comprising:
means for providing a two-dimensional pair of analog signals representative of electromagnetic parameters of an object;
means for converting said analog signals into respectively a first and a second series of digital values;
means responsive to said two series of digital values for determining respective representative values X and Y; and
computation means for performing a computation based on a discriminant equation in older to determine whether the representative values X and Y meet the conditions expressed thereby for the object, characterised in that said equation is: 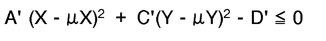 where the coefficients A', C', D', _{/}.LX, and u.Y are values appropriately selected for the object.

Preferred embodiments of the invention will now be described with reference to the accompanying drawings.

### Brief Description of the Drawings

Fig. 1 is a block diagram of a detector according to the invention;
Fig. 2 is a block diagram of each of the weighting circuits in the detector;
Figs. 3a-3c show analog signals at various stages in the detector;
Fig. 4 graphically represents digital values from one of the A/D converters in the detector;
Figs. 5a-5c graphically represent various weighting functions;
Fig. 6 graphically represents weighted digital values from one of the weighting circuits;
Fig. 7a also shows digital values, but obtained when two objects are passed in succession through the transducer in the detector;
Fig. 7b also shows weighted values, but obtained by weighting the values of Fig. 7a;
Fig. 8 is a flowchart of a program for determining primary values;
Fig. 9 shows monitoring of the weighted values to obtain a primary value;
Fig. 10 is a partial schematic view of a modified detector according to the invention;
Fig. 11 is a block diagram of a circuitry used with the detector of Fig. 10;
Figs. 12a and 12b show signals at different points in the modified detector;
Fig. 13 is a two-axis, four-quadrant coordinate system showing vectors which represent the detected values and types of metal;
Fig. 14 is a two-axis, four-quadrant coordinate system representing data for objects having material effect;
Fig. 15 is a two-axis, four-quadrant coordinate system representing data for objects having no material effect;
Fig. 16 is a two-axis, four-quadrant coordinate system showing the relationship between the correlation coefficient and the region determined by a discriminant equation;
Fig. 17 is a two-axis, four-quadrant coordinate cystem showing the region determined by another discriminant equation according to an example;
Fig. 18 is a flowchart of a program for determining and indicating whether the primary values are in or outside a predetermined region;
Figs. 19 and 20 schematically show conventional electromagnetic transducers.

Corresponding reference characters indicate corresponding parts throughout the several views of the drawings.

### Detailed Description of Preferred Embodiments

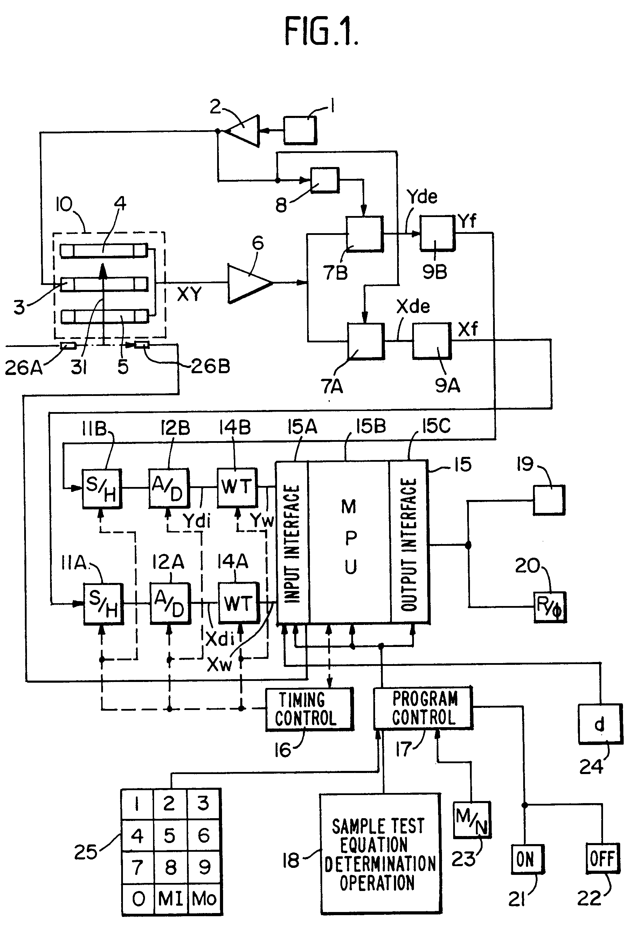

In Fig. 1, an oscillator 1 generates a basic sine-wave electrical alternating current signal having a high frequency which is selectable within a range of 30 to 400 kHz.

An electromagnetic transducer 10 is essentially the same as the conventional transducer shown in Fig. 19, and may otherwise be constructed as shown in Fig. 20.

The transducer 10 has a primary coil 3 connected through a first terminal with the output of amplifier 2, and a pair of secondary coils 4 and 5 for providing a differential signal XY representative of electromagnetic parameters of an object being evaluated.

A photoelectric sensor, which may include a light emitter 26A and a light receiver 26B, is located in front of the secondary coil 5 to detect the passage of the object into the transducer 10.

The output line of secondary coils 4 and 5 is connected through a second amplifier 6 with first inputs of a pair of multiplier/detectors 7A and 7B, which are essentially the same as the four-quadrant wave detectors or product detectors used in FM receivers.

The wave detector 7A has a second input connected with the output of first amplifier 2 to receive the amplified signal as a reference signal in phase with the basic oscillation signal.

The detector 7B has a second input connected through a phase shifter 8 with the output of first amplifier 2 to receive a reference signal out of phase, which is 90 degrees delayed from the basic signal.

The outputs of detectors 7A and 7B are connected through pairs of smoothers/filters 9A and 9B, sample-and-hold circuits 11A and 11B, analog/digital converters 12A and 12B and weighting circuits 14A and 14B with the input interface 15A of a control or computing device 15.

The input interface 15A is connected with the light receiver 26B and a device 24 for inputting a region coefficient as explained later.

The control device 15 includes a microprocessing unit (MPU) 15B and an output interface 15C, which is connected with an alarm 19, such as a lamp or buzzer emitting a warning indication when foreign matter is detected. The interface 15C is also connected with an Rlq) indicator 20 indicating the magnitude and phase angle of the data.

A timing control circuit 16 is connected with the sample-and-hold circuits 11 A and 11B, A/D converters 12A and 12B, weighting circuits 14A and 14B and control device 15, to operate them in synchronization.

A program control circuit 17 is connected with the control device 15, an execution (ON) button 21 which initiates operation of the control device 15, and a stop (OFF) button 22 which terminates it.

The program control circuit 17 is also connected with a selector switch 18 for selecting one of the modes "sample test", "equation determination" and "operation" and another switch 23 for selecting one of the sample modes "M" and "N" explained later.

The program control circuit 17 is provided with a keyboard 25 to store data for a type of object and use it for subsequent inspections. The keyboard 25 has numeric keys for specifying a code number to label the type of object after collecting the data, a command key Mi for storing the data in the memory of MPU 15b, and a command key Mo for recalling it.

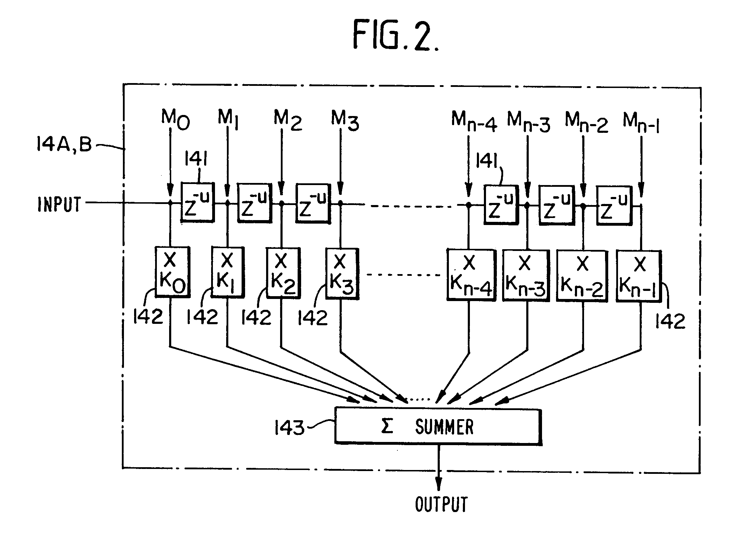

As shown in Fig. 2 (and the applicant's European Patent Appln. No. 89303673.1 filed on April 13, 1989), the weighting circuits 14A and 14B each comprise a predetermined number of stages of delay elements 141, which are connected in cascade or series, and which may be a shift register.

The inputs of elements 141 and the output of the last element are connected through coefficient multipliers 142, respectively, with a summer 143 such as a counter.

The circuit of Fig. 2 is a non-recursive type circuit, and may be what is commonly known as an FIR (finite impulse response) filter. The weighting circuit may be replaced by, for example, a 16-bit microprocessor or a commercially available multiplier/accumulator designed for digital computations.

### SIGNAL DETECTION AND WEIGHTING

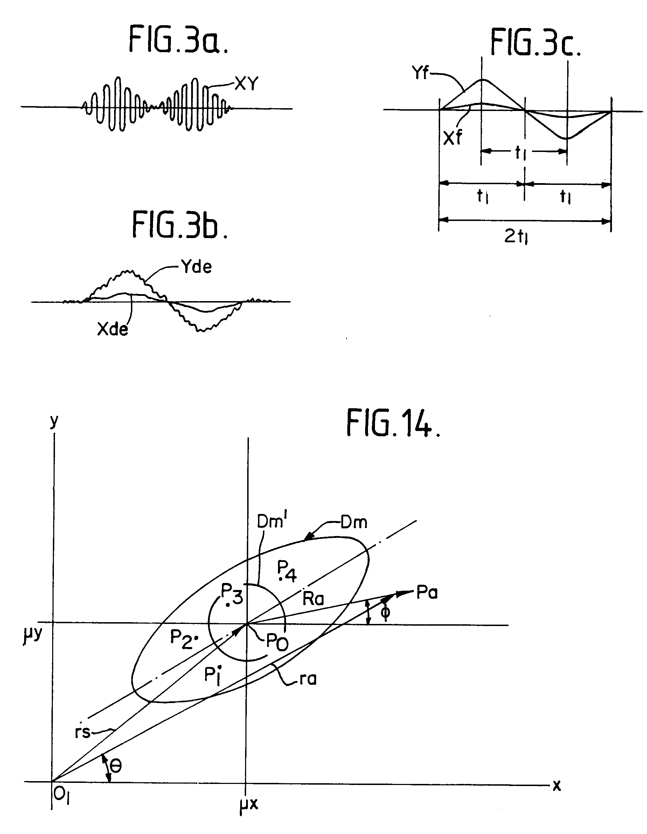

With reference to Fig. 1, when an object containing iron, for example, is passed for inspection by a belt conveyor (not shown) through the transducer 10, the electromagnetic induction formed between the primary coil 3 and the secondary coils 4 and 5 changes as the object passes. An induced voltage XY in a waveform as shown in Fig. 3a is generated as the differential signal from the transducer 10.

The differential signal XY is amplified by the second amplifier 6, and-then detected by the wave detectors 7A and 7B by multiplication by the in-phase and out-of-phase reference signals, respectively. The detectors 7A and 7B output signals Xde and Yde in waveforms as shown in Fig. 3b.

The detected signal Xde corresponds to the component of differential signal XY which is in phase with the basic oscillation signal, while the signal Yde corresponds to the component of signal XY which has a 90 degree phase delay from the basic signal.

The detected signals Xde and Yde are filtered by the associated smoothers/filters 9A and 9B to be signals Xf and Yf with waveforms as shown in Fig. 3c, which are temporarily stored in the corresponding sample-and-hold circuits 11 A and 11B.

The stored analog signals are converted to digital signals Xdi and Ydi by the corresponding A/D converters 12A and 12B at regular intervals, and input to the corresponding weighting circuits 14A and 14B, which perform weighting processing characterized by a time distribution as will be explained in detail below.

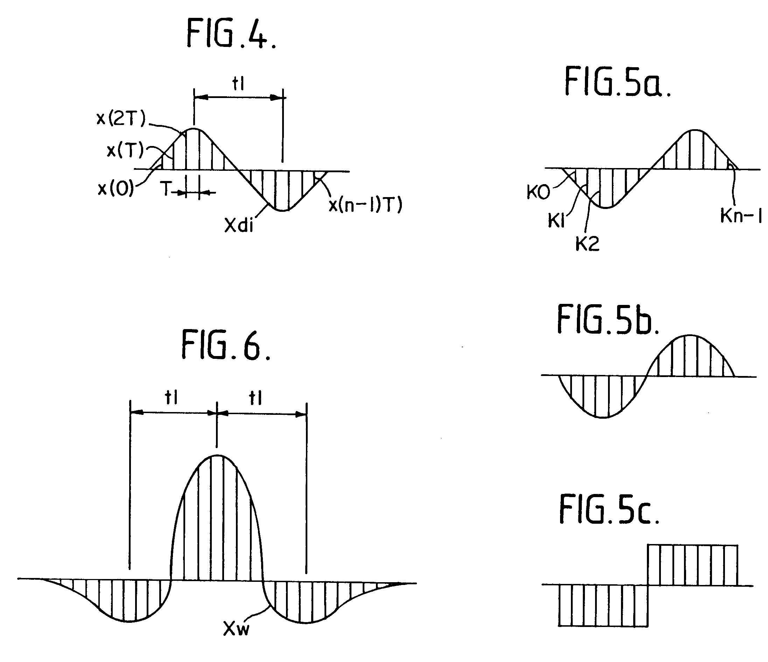

Referring to Fig. 4, the signal Xdi, for example, as a discrete series of digital values X(O), X(T) ... X((n-1)T) is input to the weighting circuit 14A at sample time intervals T. (For convenience, this explanation uses zero as the time of the first value X(O).)

Each weighting circuit 14A, 14B has a pulse transfer function for weighting which is a series expressed as a polynomial relating to Z-¹ to the order n-1, the number n being odd, as shown in the following Equation (1).

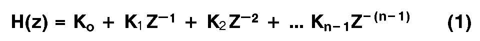

Referring to Fig. 2, the number n of multipliers 142 are assigned weighting coefficients Ko to Kn-1 which are distributed in the form of an odd function, as shown in Fig. 5a, 5b or 5c. The coefficients have a point-symmetrical distribution, and the central coefficient for the central multiplier 142 is located at the origin point of the odd function.

The triangular distribution of Fig. 5a is the reverse form of a typical waveform, which resembles Fig. 4, representing the signal change with time when iron passes through the transducer 10. The number n is determined experimentally according to the duration of the typical wave. The distribution of Fig. 5b takes the form of a doublet sine wave, and that of Fig. 5c is rectangular.

The duration of function H(z) is most preferably substantially the same as the period for which a typical material, such as iron, passes through the transducer 1.

When the digital signal Xdi in the form shown in Fig. 4 is input to the weighting circuit 14A, a time series of weighted signal values Xw as shown in Fig. 6 are output. Weighted values Yw are obtained in the same way from the weighting circuit 14B.

Thus, a digital signal with the polarities shown in Fig. 4 input to the weighting circuit 14A or 14B will produce a weighted signal as shown in Fig. 6, which has the following characteristics:
(1) The amplitude of the maximum value is about twice that of the minimum value;
(2) The polarity of the minimum value is the opposite of that of the maximum value; this minimum value appears twice at approximately an interval tl preceding and following the maximum value; and
(3) The data of the output signal which precedes and follows the central maximum value is substantially symmetrical around that maximum value.

Conversely, if the polarities of the input signal Xdi or Ydi are the reverse of those shown in Fig. 4, an output signal Xw or Yw having the exact opposite polarities from those in Fig. 6 is obtained.

In other words, the output signal from the weighting means, to which an input signal such as shown in Fig. 4 is applied, has the characteristics of a discrete time-series output signal, which is distributed in the form of an even function with the origin point having the maximum value, if the time at which the time-series weighted signal has the maximum value is defined as the origin point of time.

As shown in Fig. 4, the digital signal Xdi, for example, has a form with two polarities, positive and negative (or negative and positive), for a single object.

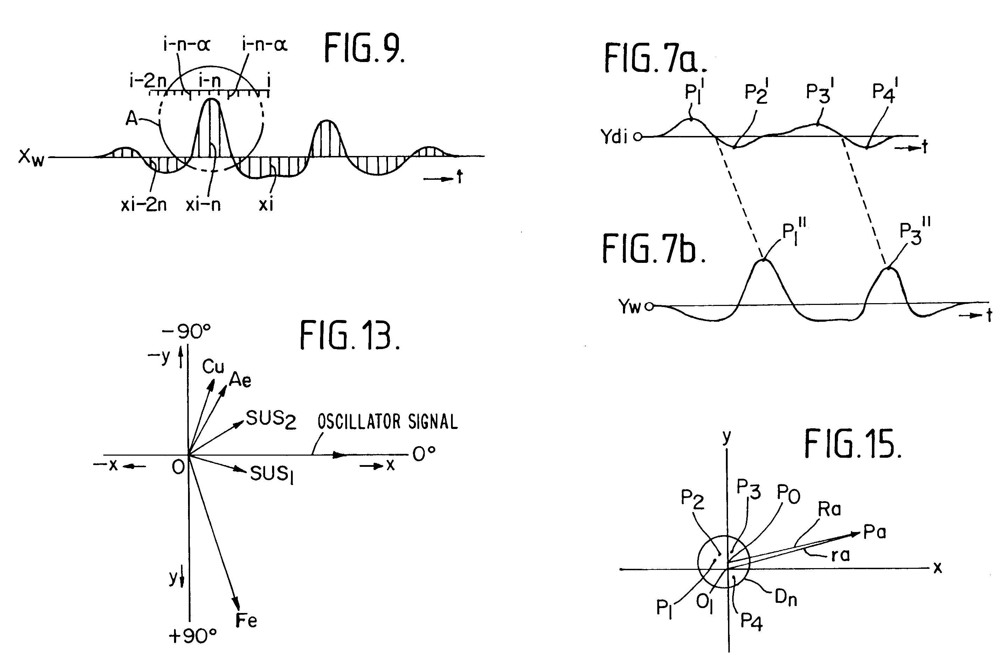

As shown in Fig. 7a, if two products containing foreign matter are passed through the transducer 1 one after another in close proximity, the signal Xdi will have four peaks P1'-P4'.In this case, a pair of peaks P1' and P2' and a pair of peaks P3' and P4' should be identified separately for the respective products.

If the signal Xdi were not weighted or otherwise processed specially, the separate signal groupings could not be identified. Thus, the peaks P2' and P3' might be incorrectly identified as one pair, due to the polarities being reverse. This would result in identification of a different material by means of the computed data and the R/o indicator 20.

As shown in Fig. 7b, the weighted signal Xw can be correctly identified for the different products, because the peaks P1" and P3" correspond respectively to the pair P1'-P2' and the pair P3'-P4' in Fig. 7a. Thus, even if there is a continuous flow of products, the signals can always be identified for the respective products.

### PRIMARY VALUE DETERMINATION

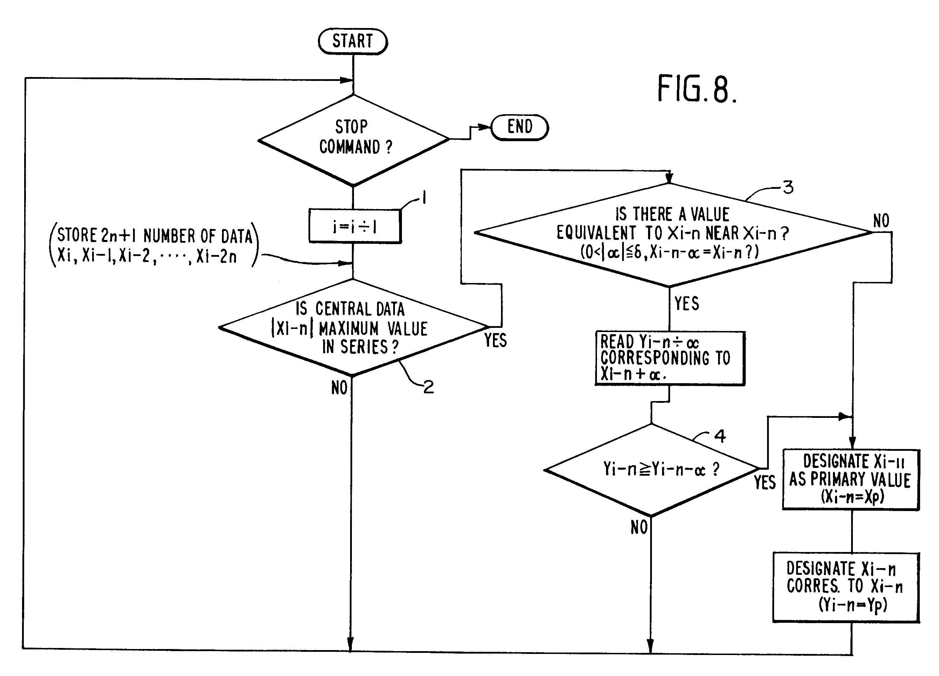

The MPU 15B has a program, as shown in Fig. 8, to determine or recognize "primary values" out of the weighted signals Xw and Yw. The primary values represent the electromagnetic characteristics of an object being inspected.

In order to determine the primary values, it is necessary to monitor a typical change with time of the weighted signal Xw, for example, as shown in Fig. 6. The monitoring span should be three to five times the time interval tl of the two peaks which occur when foreign matter generates a signal, as shown in Fig. 3c or 4.

As shown in Fig; 9, an appropriate number 2n + I of weighted values Xw obtained during a specified time span are constantly monitored. As shown in the following Table 1, the values Xw are stored in order from the newest data to the oldest data as Xi to Xi-2n in a series of memory addresses 0-2n.

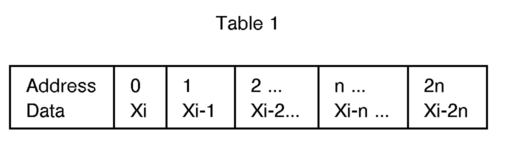

When new data is input to address 0, the previous data shift in order from the left to the right, and the oldest data at address 2n is discarded. At each time, the data Xi-n at the central address n is monitored to check whether or not its absolute value is the maximum, or one of several maxima, among the values Xi to Xi-2n at that time (steps 1-2 in Fig. 8)

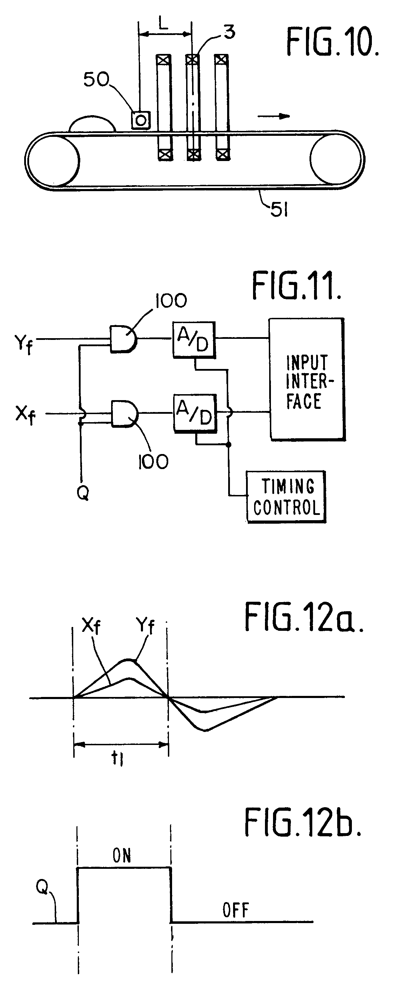

If it is, the following equation (2) is computed to check whether or not there is an identical maximum value Xi-n + in the specific vicinity, as generally indicated by the circle A in Fig. 9, of the central address n (step 3). 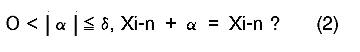 Provided that the value 6 defines the limit of the vicinity to the central address.

If there is not, Xi-n is determined as the primary value Xp. If there is, Yi-n and Yi-n + which have the same addresses as those of Xi-n and Xi-n + are compared. If Yi-n ≧Yi-n+ a (step 4), Xi-n is determined to be the primary value Xp, and the corresponding value Yi-n is determined to be the primary value Yp for the weighted signal Yw.

Conversely, if Yi-n + is found to be larger than Yi-n, Xi-n is not determined to be the primary value. If this occurs, when Yi-n + is shifted to the central address n later, that value becomes the maximum value and is thus determined to be the primary value Yp.

If the objects are limited to solid objects or individual batches such as packaged products, because the signals are originally detected individually, the primary values can be obtained without weighting.

For example, as shown in Fig. 10, a positionally adjustable photoelectric or other type of sensor 50 (having an operating time different from that of sensor 26A, 26B in Fig. 1) is provided at an appropriate interval L lengthwise along a belt conveyor 51 with respect to the center of primary coil 3.

As shown in Figs. 12a and 12b, the position and operating time of sensor 50 are preadjusted so that the signal Q generated by the sensor is ON for the time tl corresponding to one half (e.g. the first half) of the undulating waveform of filtered signals Xf and Yf generated when the object is passed through the coils by the conveyor 51, beginning from the rise of the signal and continuing until the signal reaches the maximum value and then falls past the zero point.

The signals Xf and Yf are input to AND circuits 100 as shown in Fig. 11 together with the passage signal Q, so that the signals Xf and Yf can be detected only while the signal Q is ON. As shown in Figs. 12a and 12b, only the first halves of signals Xf and Yf are detected as signals in the form of a solitary wave similar to the weighted signals.

Subsequently, these signals are converted to digital signals, and primary values can be obtained from the digital signals in the same way as for the weighted signals.

By obtaining the primary values in this way, although there are drawbacks such as the limitation of the objects to packaged types and the need to adjust the position etc. of the sensor, the determination of primary values is simpler than by weighting.

### JUDGMENT (IDENTIFICATION)

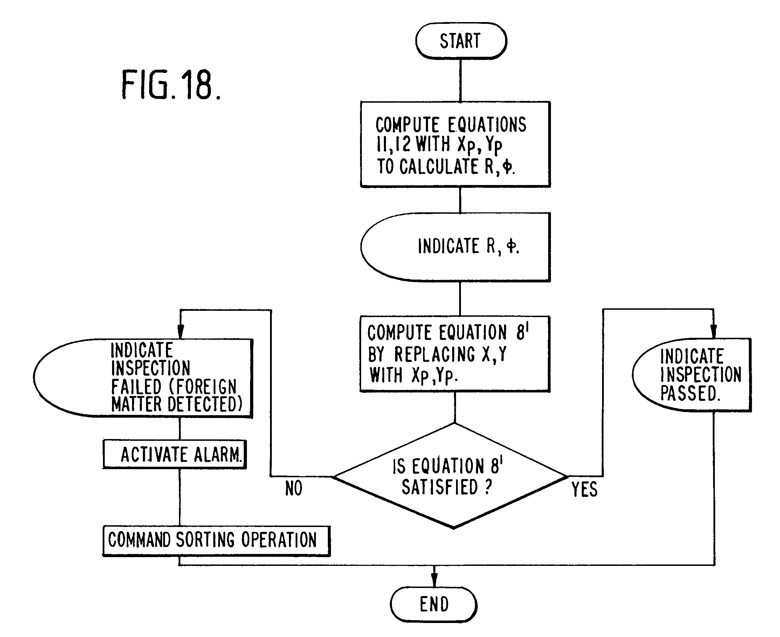

The MPU 15B has a program for judgement or identification as shown in Fig. 18, which will be explained later.

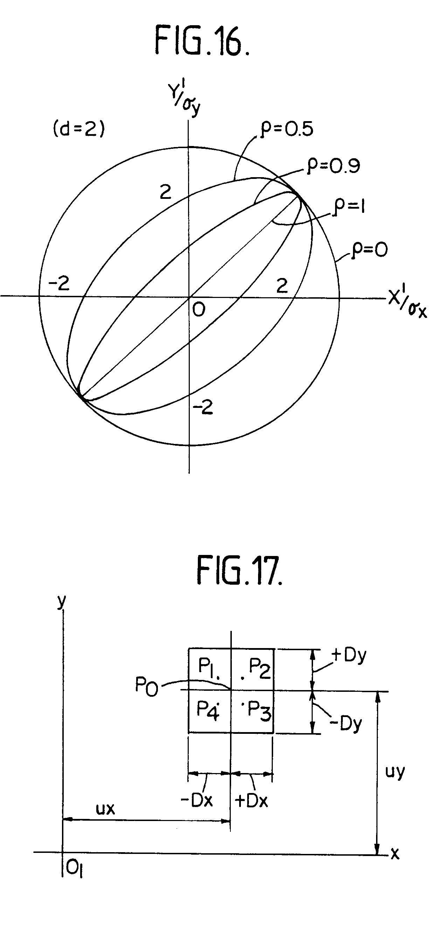

Fig. 13 shows vectors representing the primary values Xp and Yp for various materials along the x and y axes, respectively.

The phase angle of the vector for iron (Fe) is generally delayed approximately 90 degrees from that of the oscillation signal, and its absolute value or output sensitivity is high. As shown in Figs. 3b and 3c, the y component of the signal for iron is larger in absolute value than the x component.

In contrast, the phase difference of the vectors for stainless steel (SUS) with respect to the oscillation signal is not very large. For some types of stainless steel SUS1 (Fig. 13), both components are positive values. For other types of stainless steel SUS2, the x and y components are respectively positive and negative values.

Some types of materials generate lagging signals like that of iron, and others generate leading signals.

The material effect generally has characteristics and a phase angle which are peculiar to each individual product. Although the size of the vector will change with the content volume of the product, the phase angle will usually not change very much.

Referring to Fig. 14, points P1 (Xp1, Yp1), P2 (Xp2, Yp2), etc. represent the primary values Xp and Yp for various volumes of products of the same type which have material effect, but which contain no foreign matter.

Even if products of the same type differ somewhat in volume or weight, these points will be included in an elliptic region or domain Dm, and will tend to be distributed near and around the central average point Po (uX, u.Y), which can be represented by a vector rs from the origin point 01 of the coordinate.

The primary values for packages of products of the same type and substantially of the same volume and weight with material effect, but with no foreign matter, will fall within a small circular region Dm', with its center at the average point Po, due to the vectors being substantially constant in size and angle.

The primary values for a product having material effect and containing even minute particles of foreign matter, such as iron, will be represented at a point Pa (Xa, Ya) as a vector ra. Subtraction of vector rs from vector ra gives a deviation vector Ra from the average point Po.

Thus, the region Dm defines the distribution boundary for products without foreign matter, and data such as point Pa outside this region are judged to represent products which contain foreign matter.

For products having neither material effect nor foreign matter, almost no waveform characteristics as shown in Figs. 3a-3c appear. In this case, random noise resulting from internal electrical factors, such as the operation of the amplifiers, wave detectors or conveyor, becomes the primary factor in determining the distribution region.

As shown in Fig. 15, these products are represented as points P1, P2, etc. within a circular region Dn on the graph. The central average point Po of region Dn is extremely close to the origin point 01. The region Dn is extremely smaller than for products having material effect.

In this case, the size of the deviation vector Ra is approximately the same as that of the signal vector ra. Because of the small size of region Dn, even if the absolute values of these vectors are relatively small, they will extend beyond region Dn. It is thus possible to detect even more minute particles of foreign matter than for products having material effect.

In order to obtain the data needed to determine the regions for various types of objects, there are sample tests in "M" and "N" modes, which have the following characteristics.

### M (MATERIAL EFFECT DETECTION) MODE SAMPLE TEST

This test is carried out for objects which have material effect and contain no foreign matter by obtaining primary values Xp and Yp from samples as "M" mode sample data Xsm and Ysm, such as represented by points P1-P4 in Fig. 14, when the objects pass through the transducer 10. These data include the product characteristics together with their occasional fluctuations, and also the effects of the various minute amounts of noise which remain even after filtering.

### N (NOISE DETECTION) MODE SAMPLE TEST

This test is done for objects which have no material effect and contain no foreign matter, and for which it is difficult to obtain the primary values.

When the passage of a packaged object, for example, through the transducer 1 is detected by the sensor 26A-26B (Fig. 1), a passage signal is generated for a period of time corresponding to the time, 2tl (Fig. 3c) which is the sum of time tl preceding the passage of the center of the primary coil 3 by the object and time tl following it. While this passage signal is being generated, pairs of weighted values Xw and Yw are extracted as "N" mode sample data Xsn and Ysn, respectively, at intervals of a certain number of samples from among the continuous weighted values. For example, 10 to 20 weighted values are extracted for one packaged object. These values Xsn and Ysn may be represented by points P1-P4 in Fig. 15.

Generally, because various types of random noise are a major factor concerning the signals of products which have no product characteristics, the sample values Xsn and Ysn are also random with regard to a time series. It is possible to appropriately extract the characteristics of the amplitude, distribution, etc. of the original random signals from the many data signals obtained by extracting at certain intervals as described above.

The sample values Xsm and Xsn of the M and N modes are generally referred to as a sample value Xs hereinafter, and the values Ysm and Ysn as a sample value Ys.

The sample values Xs and primary values Xp are generally termed representative values X hereinafter, and Ys and Yp as representative values Y.

### CORRELATION

For more precise region determination, consideration is given to the correlation of representative values X and Y. Specifically, a correlation coefficient p as a factor representing the correlation of values X and Y is included in discriminant equation (5), which determines the region and will be explained later.

The relationship between this correlation coefficient p and the region is as follows:
Supposing X = X - µX and Y' = Y - µY, in order to find a general expression, if ox and ay are selected for the unit measures of X and Y, and X'/₆x and Y'/ay are used for the axes of the coordinate system in order to normalize it, the relationship between the coefficient p and the region can be expressed as shown in Fig. 16.

In Fig. 16, the shape or expanse (area) of the region changes with the correlation coefficient. Specifically, if there is no correlation (if p = 0) between the representative values X and Y, the region is a circle, with widest possible width. Also, the stronger the correlation, the larger the difference between the major and minor axes, and the more elliptic the region, so that the region becomes narrower as the correlation coefficient approaches "1".

If the material effect is small, because the weighted signals Xw and Yw have the characteristics of noise, that is, the sizes and phase of the signals are random and mutually unrelated, as shown in Fig. 15 and explained earlier, when the two-dimensional pairs of representative values X and Y extracted at random from weighted values Xw and Yw, respectively, are plotted on the coordinate system, they are distributed in an approximately circular region.

In other words, in this case, the correlation coefficient p is a value approaching zero.

On the other hand, if the material effect is large and the objects are either lumps or have fluctuations in their content volume, although the representative values X and Y which are primary values Xp and Yp will sometimes change momentarily, the ratio of them will maintain an approximately fixed relationship. In other words, because there is correlation between X and Y, the plotting of the pairs of these values on a coordinate system is generally distributed in an elliptical shape as shown in Fig. 14.

Thus, as will be explained later, the discriminant equation which determines the region can be established as a discriminant equation for an elliptical region which includes correlation. By including correlation in the equation, the region can be more narrowly defined than if correlation is not taken into consideration, and defective products which were mistakenly judged to be non-defective when correlation was previously not taken into consideration can be correctly judged to be defective, thus resulting in more accurate judgements. In other words, the introduction of the concept of correlation improves the capacity to judge the presence of foreign matter.

The sample test used to determine the coefficients etc. of the equation is done in the M or N mode. In this test, a large number of pairs of sample data Xs and Ys are obtained, stored in the memory of MPU 15B, and used to compute each of the following values (data for the equation).
µX: average value of Xs
µY: average value of Ys
₆x: standard deviation regarding Xs
ay: standard deviation regarding Ys
axy: covariance regarding Xs and Ys
p: correlation coefficient expressed as

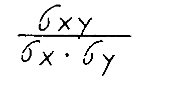

Because the detailed explanations of the symbols listed above are contained in general reference works on statistics, they will be omitted here.

As already explained, the primary values Xp and Yp are used to compute a predetermined discriminant equation, and judgement concerning the presence of foreign matter is made on the basis of whether or not the equation is satisfied. The equation is described below. Discriminant equation according to the first example, but which is not an embodiment of the present invention. (basic discriminant equation)

In the judgement processing, an equation such as the following Equation (4), which is one example of the statistical distribution functions found in reference works on statistics, is used as the density function of the statistical distribution of the data. This equation works both for inspection objects which have material effect and for those which do not, as long as the data is considered to be from the same population.

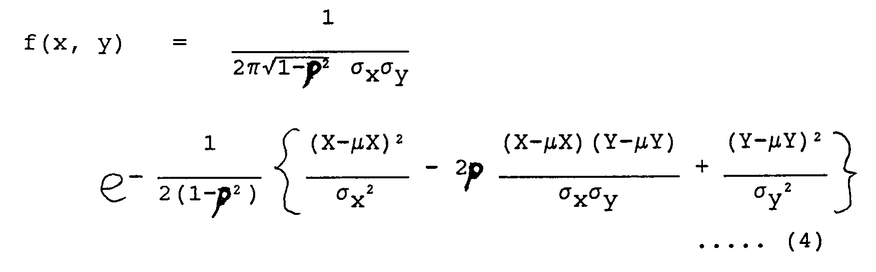

In this example, in order to determine the region condition, the part of the above Equation (4) concerning the exponent of the equation is referred to as "D". This D is a numerical value which determines the region, and it may be determined either based on empirical data, or by the following equation which uses correlation coefficient p and the region coefficient d which will be explained later.

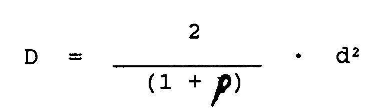

Thus, using the above discriminant equation, the following Equation (5) is the basic discriminant equation for determining the region.

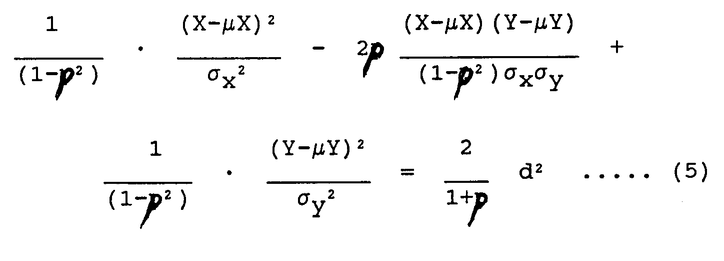

The region coefficient "d" in the above Equation (5) is input by the region coefficient setting device 24 shown in Fig. 1, which is the input device for this embodiment.

The value d is essentially like the numerical coefficient a in statistics. For example :
i) For 2a,d = 2, 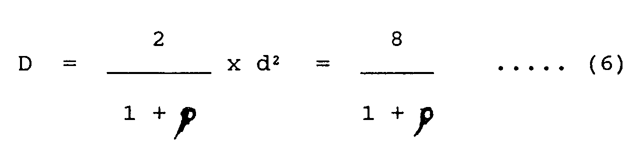
ii) For 3a,d = 3,

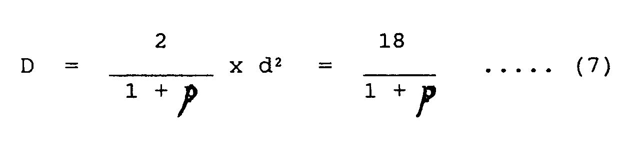

This coefficient d can be appropriately selected by the operator in association with the confidence value. Thus, when the correlation coefficient p is calculated and the region coefficient d is selected by the operator, the value of "D", which determines the region, is determined.

In addition, by using the following definitions, 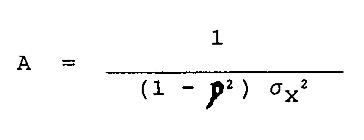 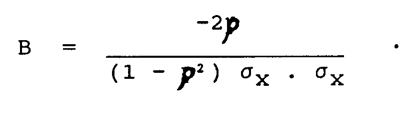 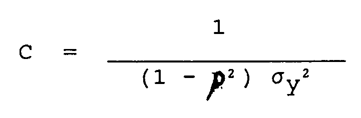 Equation (5) can be rewritten as the following Equations (8) and (8)'

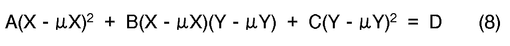

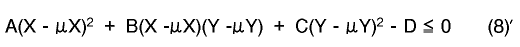

Equation (8) determines the boundary of the distribution region, and Equation (8)' is the discriminant equation which judges whether or not the data is included in the region.

As explained earlier, because Equation (8) defines an elliptical or circular region, depending on the value of the correlation coefficient p, it is applicable to both products which have material effect and those which do not.

Equation (8)' is included in the MPU 15B in the form of a program, and computed for each pair of primary values Xp and Yp at final inspection of objects.

Theoretically, the region discriminant equation can be determined by the operator selecting and inputting appropriate values A, B and C, and the region coefficient d in accordance with the characteristics of the object. However, because it is not easy to select these values, provision has been made in this embodiment to simplify the operator's selection tasks.

Specifically, instead of providing a device to input the values A, B and C, the MPU 15B has a program whereby, when the operator uses the switch 18 to select the equation computation mode, the data which was obtained and stored in the previous sample test is recalled, the statistical quantities uX, µY, ₆x, ay, p, etc. are automatically computed, and the values A, B and C are also automatically computed.

The program further computes the value D in Equation (8) with these computed results when the region coefficient d is input by the operator via the device 24. This determines all coefficients of discriminant Equation (8)' to specify this equation. In this way, the automatic setting for the region discriminant Equation (8)' is completed.

### Discriminant equation according to the first embodiment

Instead of the discriminant equation for the above embodiment, it is also possible to use the discriminant equation described below. The embodiment using this equation will be explained as a first embodiment with regard to the discriminant equation.

If the inspection objects have an approximately constant volume or a fixed size, such as for packaged products, even if the objects have material effect, because the major axis of the elliptical distribution of the characteristics becomes shorter and the shape approaches that of a circle, the following Equations (5a) and (8a) can be used in place of the Equations (5) and (8).

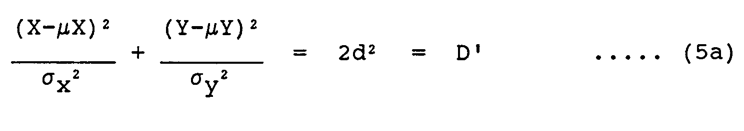

This Equation (5a) is applicable when p = 0 in the first example already described.

Here, with the following definitions,

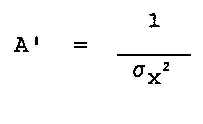

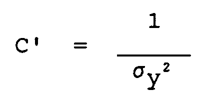

Equation (5a) can be used to determine the following Equation (8a)' as the discriminant equation.

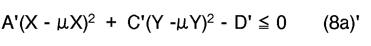

This case is equivalent to not taking the correlation into consideration, in other words, not using the correlation coefficient (p). In addition, just as in the first example, it is also possible to assign a direct numerical value for D' using an empirical value.

### Discriminant equation according to the third embodiment

Furthermore, instead of the discriminant equations described above for the first example and first embodiment, it is also possible to use the discriminant equation described below. The example using this discriminant equation will be explained as a second example with regard to the discriminant equation, but which, as with the first example, is not an embodiment of the present invention.

In other words, just as for the first embodiment described above, if the inspection objects are of an approximately constant volume or fixed size, such as packaged products, when the measurement data (primary values) P1-P4, etc. of a typical inspection object are plotted on an x-y coordinate system, they are gathered together in the vicinity of a specific location on the coordinate system, as shown in Fig. 17.

These data can be considered to be distributed within a closed range of predetermined spreads of ±d.₆x (= ±Dx) and ±d. ₆y(= ±Dy) in the positive and negative directions with respect to the average values µX and µY along the x and y axes, respectively. This derives the following Equations (5b) and (5c).

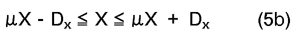

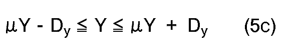

The above Equation (5b) and (5c) can be transformed to obtain the following Equations (8b)' and (8c)'.

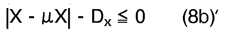

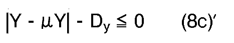

Equations (8b)' and (8c)' are the discriminant equations, and objects which satisfy both of these equations are non-defective products containing no foreign matter. On the other hand, objects which fail to satisfy either one or both of these equations are judged to be defective products containing foreign matter. An illustration of the region determined by these equations appears as a region enclosed within a rectangle, as shown in Fig. 17. In other words, non-defective and defective products fall respectively in and outside the region.

In Fig. 17, the distance between the central point Po of the region and the origin point 01 of the coordinate system represents the average size of the material effect of the product. Thus, for objects having no material effect, these points Po and 01 are the same.

Discriminant equations (8b)' and (8c)' are also programmed in the control device 15. The correlation coefficient p is also not taken into consideration for this third embodiment. The values Dx and Dy may also be empirical values.

As explained above, the operator operates the following devices:

the device 24 to specify the region coefficient d;

the numeric keys of keyboard 25 (Fig. 1) to specify the code number for the type of object;

the command key Mi of keyboard 25 to input and store in the MPU 15B with the code number the various coefficients, such as A-D for the first example, A', C' and D' for the first embodiment, or Dx and Dy for the second example, and the statistical quantities µX and µY of the discriminant equation/s computed with the data obtained from the sample test results and with the coefficient d input by the operator; and

the command key Mo to recall with the code number the data when the same discriminant equation is to be used on a subsequent occasion.

Through these operations, various coefficients, statistical quantities, etc. related to each of a plurality of different product types are stored during the first inspection, and, if a product of one of these types is to be inspected again, the relevant information can be recalled and instantly used.

### OPERATION

The following is an explanation of the procedures involved in the detection of foreign matter.

### PRELIMINARY PROCEDURES

### (1) Test Operation

The operator sets the selector switch 18 to the sample test mode. At the same time, the R/φ indicator 20 is set to indicate the absolute value r and phase angle 0 of a vector r from the origin point on the coordinate system (Fig. 14, 15). The values r and 0 are calculated with weighted values Xw and Yw as follows.

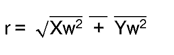

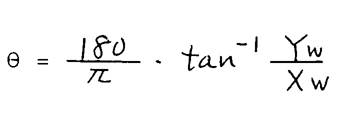

In this way, the operator is able to continuously monitor the indication values during no-load operation and the subsequent sample test.

First, a no-load test operation is performed to find the noise level of the apparatus itself on the indicator 20.

Next, the operator selects a number of samples, which have been determined to be free of foreign matter, from a type of objects to be inspected. He puts the samples to be passed through the coils, reads the absolute values on the indicator 20, and determines whether or not the values have increased from those during the no-load operation.

If the values are clearly larger than the noise level, it is judged that there is material effect, and the subsequent sample test is carried out in the M mode. If not, it is judged that there is no material effect, and the sample test is carried out in the N mode.

### (2) Sample Test

The operator sets the selector switch 23 to either the M or N mode, presses the execution button 21, selects a large number of samples having no foreign matter from that type of objects, and puts the samples to be passed through the coils. As a result, regardless of which mode was used, the data for the samples is stored in the MPU 15B.

### (3) Discriminant Equation Determination (Specifying)

When the operator sets the switch 18 to the equation computation mode and presses the execution button 21, the values uX, µY, ₆x, ay, p, etc. for the samples are computed as described earlier with the data obtained in the sample test.

For the first example, the equations for the values A, B and C are then calculated to determine the coefficients for the left side of Equation (8).

When the operator inputs the appropriate region coefficient d, the value D which determines the region conditions is calculated, and the discriminant equation (8)' is specified. This completes the preparations for the computation of the discriminant equation for the first example.

For the first embodiment and second example as well, the equations (8a)' or (8b)' and (8c)' are determined likewise.

The values D, D', Dx, Dy, etc. can be found by calculating as explained, or, if empirical values are known, they can be input directly.

### (4) Storage of Coefficients and Statistical Quantities

When the operator completes the equation determination, it is possible, instead of proceeding directly to actual operation, to store the coefficients and statistical quantities for the discriminant equation peculiar to each type of objects and recall them at any time, as explained earlier.

Specifically, the operator stores the values A, B, C, D, µX, µY, etc. for the particular discriminant equation by inputting the code number for the type of objects via the keyboard 25 and then pressing its memory key Mi, and recalls the data when needed by inputting the same code number and then pressing the key Mo.

Thus, in actual operation, by specifying a code number for various data pertaining to a particular type of object and storing it, part of the preliminary procedures can be eliminated during subsequent inspection work.

### ACTUAL OPERATION

Actual operation begins once the preliminary procedures have been completed. During actual operation, the R/φ indicator 20 is set to indicate the absolute value R and phase angle q) of a deviation vector R, which are computed by Equations (11) and (12) below with the primary values Xp and Yp.

When the operator sets the switch 18 to the operation mode for actual operation, the program control circuit 17 inputs the program for inspection of objects to the MPU 15B. In this mode, the judgement section of MPU 15B receives the data in the M mode.

The operator presses the execution button 21, and passes through the transducer 10 objects the samples of which have been tested, but it is unknown whether or not the objects contain foreign matter. If the transducer 10 outputs a signal XY as shown in Fig. 3a for one object, it is processed through the various devices and input to the MPU 15B.

In the MPU 15B, a pair of primary values Xp and Yp are obtained by the program of Fig. 8. Even during this processing, other objects are continuously detected (parallel processing).

As shown in Fig. 18, the following equations are then computed with the primary values, and the results are indicated in the R/φ indicator 20.

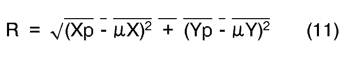

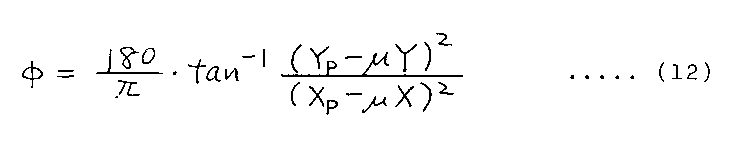

As mentioned earlier, the values µX and µY are the average sample values obtained in the sample test in the M or N mode, and the values A-D, or A', C' and D', or Dx and Dy in the discriminant equation/s (8)', (8a)', or (8b)' and (8c)' have been predetermined in the preliminary procedures.

The equation/s is/are then computed with the values Xp and Yp substituted for X and Y, respectively. If the result satisfied the equation (i.e., the left side is 0 or negative), the data is judged to be in the region. If the equation is not satisfied, the data is judged to be outside of the region.

If the data is outside the region, the alarm 19 is activated to warn that the object has not passed the inspection, and a sorting device (not shown) further down the line is commanded to remove the object.

With this method, when an object contains water, salt or the like and has a material effect, if the amount of the contained material varies, the electromagnetic characteristics will change and the region conditions of the reference object (standard product) will not be satisfied. This will cause a signal which indicates that the object is defective to be generated. Thus, this method may be effective for use in quality control.

The R/φ indicator 20 may be adapted to indicate the type of material effect of the object, or the type of foreign matter (metal, iron or non-ferrous metal, etc.) which has been detected in the object, as shown in Fig. 13.

### ADVANTAGES OF DETECTOR WITH JUDGEMENT SECTION

(1) Because the data obtained in the sample test is automatically computed to determine the judgement conditions, the determination of the judgement conditions is almost completely automatic. In addition, because the data is stored after it is collected and can then be recalled and used again for the same inspection object, there is no need to collect the data for the inspection object at that time.
(2) The operator only has to consider such things as whether to select a confidence level of 2a or 3a in order to determine the region coefficient, and there is no need for adjustments which require skilled expertise, such as phase adjustments of the excitation signal or signal detection reference signal, as are required in prior art detectors.
(3) It is possible to achieve a remarkable improvement over prior art detectors in the precision of the detection of foreign matter which is contained in inspection objects having material effects.
(4) It is possible to inspect more types of inspection objects than with prior art foreign matter detectors of this type, thus increasing the range of inspection applicability. In other words, regardless of whether the inspection objects are separate or packaged, and also regardless of whether they have material effect or not, the detector of this invention can be set and used according to a fixed procedure without being affected by the configuration or characteristics of the inspection objects.

### General Advantages of the Invention

With this invention, as described above, it is possible to perform accurate detection even if the inspection object has material effect, and also even if the inspection object contains minute particules of metal which react in the same phase as that material effect.

Moreover, by knowing in advance the relationship between the type of metal and the phase, it is also possible to detect the type and size (quantity) of the metal. Also, because there is no need for precise trial-and-error adjustments of either the phase or the sensitivity, as was required in prior art detectors, this detector can be easily operated by anyone without requiring extended preparations.

Thus, damage to processing equipment which might result from the presence of foreign matter in raw materials, etc. is prevented, and, furthermore, the shipment of products etc., containing foreign matter is also prevented.

In addition, because the detection signals contain not only data on whether or not foreign matter is present, but also quantitative data as well, the detection of foreign matter or of quality differences is easily accomplished. Thus, with this detector, it is also possible to detect instances where the quality of the product differs from the specified level.

Furthermore, because the composition is simple, the detector can be provided at a lower cost than the prior detectors described herein, and maintenance and adjustments can be easily performed.

Even if metal or other foreign matter is contained inside an inspection object having material effect and that foreign matter has a phase of the same direction as the phase direction of said material effect, because the two-dimensional pair of digital primary value signals for the inspection object is computed and identified using a discriminant equation which has been predetermined in consideration of that material effect of the inspection object, identification can be performed with greater sensitivity than possible using a detector of the prior art.

For the same reason as above, even if there is noise generated by the device, the detection of metals and other foreign matter can be performed without being affected by that noise.

Because the detection signals are expressed by two coordinates (i.e., in a two-dimensional plane) the type and size of metal can be easily identified, and even foreign matter which generates no more than a small signal can be detected.

## Claims

1. A detector for detecting foreign materials in an object comprising:
means (1 to 10) for providing a two-dimensional pair of analog signals representative of electromagnetic parameters of an object;
means (11,12) for converting said analog signals into respectively a first and a second series of digital values;
means (14,15) responsive to said two series of digital values for determining respective representative values X and Y; and
computation means (15) for performing a computation based on a discriminant equation in order to determine whether the representative values X and Y meet the conditions expressed thereby for the object, characterised in that said equation is: 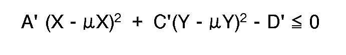 where the coefficients A', C', D', _{/}.LX, and u.Y are values appropriately selected for the object.

2. A detector as claimed in claim 1, wherein the converting means (11,12) is capable of providing a plurality of sets of first and second digital values, each set being produced in response to analog signals representative of electromagnetic parameters of a respective sample of said object; wherein: 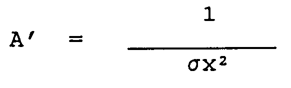 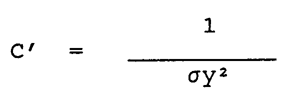 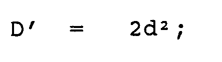 and wherein:
µX and µY are averages of representative values X and Y, respectively, for the samples; and
ox and ay are respectively standard deviation values of X and Y for the samples;
the detector further comprising means (15) for obtaining the values of said coefficients µX and µY, together with A', C' and D', from said sets of first and second digital values and a value d appropriately selected for said object.

3. A detector as claimed in claim 1 or claim 2, and further comprising:
means (15, 25) permitting storage and retrieval of a selected one of sets of reference coefficients for said equation, each set being associated with a respective type of object.

4. A detector as claimed in claim 3, wherein said storage permitting means further permits storage of a code associated with the type of object to which the coefficients relate, thereby permitting later retrieval of said data by entry of said code number.

5. A detector as claimed in any preceding claim, further comprising:
means (50) for generating a passage signal while said object is passing through a predetermined region during which said analog signals are provided; and
means (15) for causing said representative values X and Y respectively from said first and second series of digital values to be determined while said passage signal is generated.

6. A detector as claimed in claim 5, wherein said providing means (1 to 10) is so arranged that the analog signals each adopt values which differ in a first sense from an initial value as the object travels through a first part of its path and which differ in a second, opposite sense from the initial value as the object travels through a second part of its path, and wherein said predetermined region corresponds to one of said parts of the object's path.

7. A detector as claimed in any preceding claim, including means (15,25) for storing a plurality of sets of reference values, each set relating to a respective type of object, said means (15,25) permitting retrieval of each set in response to entry of a respective code.

8. A detector according to any preceding claim, wherein the providing means (1 to 10) comprises:
an oscillator (1) for generating a basic oscillating signal;
a phase shifter (8) connected to said oscillator (1) and adapted to provide a phase-shifted oscillating signal;
an electromagnetic transducer (10) including an excitation coil (3) connected to said oscillator (1), and two interconnected detection coils (4,5) magnetically coupled to said excitation coil and adapted to produce a differential signal therebetween when an object is passed through said transducer (10);
a first detector (7A) connected to said detection coils (4,5) and said oscillator (1) and adapted to produce a first detected analog signal representing the component of said differential signal in phase with said basic oscillating signal; and
a second detector (7B) connected to said detection coil (4,5) and said phase shifter (8) and adapted to produce a second detected analog signal representing the component of said differential signal in phase with said phase-shifted oscillating signal.

## Patentansprüche

1. Detektor zum Erfassen von Fremdstoffen in einem Gegenstand, mit:
- einer Einrichtung (1 bis 10) zum Erstellen eines zweidimensionalen Paars analoger Signale, die für elektromagnetische Parameter eines Gegenstands repräsentativ sind;
- einer Einrichtung (11, 12) zum Umwandeln der analogen Signale in eine erste bzw. eine zweite Reihe digitaler Werte;
- einer Einrichtung (14, 15), die auf die zwei Reihen digitaler Werte reagiert, um jeweilige repräsentative Werte X und Y zu bestimmen; und
- einer Berechnungseinrichtung (15) zum Ausführen einer Berechnung auf Grundlage einer Erkennungsgleichung, um zu ermitteln, ob die Repräsentativwerte X und Y den dadurch wiedergegebenen Bedingungen für den Gegenstand genügen , gekennzeichnet durch die Gleichung 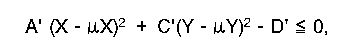 wobei die Koeffizienten A', C', D', µX und uY als auf den Gegenstand angepaßte Werte gewählt sind.

2. Detektor nach Anspruch 1, bei dem die Umwandlungseinrichtung (11, 12) dazu in der Lage ist, mehrere Sätze erster und zweiter digitaler Werte zu erstellen, wobei jeder Satz auf analoge Signale hin erzeugt wird, die für elektromagnetische Parameter einer jeweiligen Probe des Gegenstands repräsentativ sind; mit: 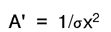 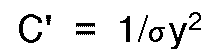 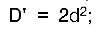 und wobei
-- µX und uY die Mittelwerte der Repräsentativwerte X bzw. Y für die Proben sind; und
-- σx und ay die jeweiligen Standardabweichungswerte von X bzw. Y für die Proben sind;
- der Detektor ferner eine Einrichtung (15) zum Erhalten der Werte der Koeffizienten µX und µY zusammen mit A', C' und D' aus den Sätzen der ersten und zweiten digitalen Werte und eines Wertes d, der für den Gegenstand geeignet gewählt ist, aufweist.

3. Detektor nach Anspruch 1 oder Anspruch 2, der ferner folgendes aufweist:
- eine Einrichtung (15, 25), die das Abspeichern und Wiederabrufen eines ausgewählten Satzes von Bezugskoeffizienten für die Gleichung erlaubt, wobei jeder Satz einem jeweiligen Gegenstandstyp zugeordnet ist.

4. Detektor nach Anspruch 3, bei dem die die Abspeicherung erlaubende Einrichtung ferner das Abspeichern eines Codes erlaubt, der dem Gegenstandstyp zugeordnet ist, auf den sich die Koeffizienten beziehen, wodurch späteres Wiederaufrufen der Daten durch Eingabe der Codenummer möglich ist.

5. Detektor nach einem der vorstehenden Ansprüche, ferner mit:
- einer Einrichtung (50) zum Erzeugen eines Durchlaufsignals, während der Gegenstand durch einen vorgegebenen Bereich läuft, während die analogen Signal erzeugt werden; und
- einer Einrichtung (15), die dafür sorgt, daß die Repräsentativwerte X und Y jeweils aus der ersten und zweiten Reihe digitaler Werte bestimmt werden, während das Durchlaufsignal erzeugt wird.

6. Detektor nach Anspruch 5, bei dem die Erstelleinrichtung (1 bis 10) so ausgebildet ist, daß die analogen Signale jeweils Werte einnehmen, die sich in einer ersten Richtung von einem Eingangswert unterscheiden, wenn der Gegenstand in einen ersten Teil seines Wegs läuft, und die sich in einer zweiten, entgegengesetzten Richtung vom Anfangswert unterscheiden, wenn der Gegenstand in einem zweiten Teil seines Wegs läuft, und wobei der vorgegebene Bereich einem der Teile des Wegs des Gegenstands entspricht.

7. Detektor nach einem der vorstehenden Ansprüche, mit einer Einrichtung (15, 25) zum Abspeichern mehrerer Sätze von Bezugswerten, wobei sich jeder Satz auf einen jeweiligen Gegenstandstyp bezieht, wobei die Einrichtung (15, 25) das Abrufen jedes Satzes auf die Eingabe eines entsprechenden Codes hin erlaubt.

8. Detektor nach einem der vorstehenden Ansprüche, bei dem die Erstellungseinrichtung (1 bis 10) folgendes aufweist:
- einen Oszillator (1) zum Erzeugen eines Schwingungsbasissignals;
- einen Phasenschieber (8), der mit dem Oszillator (1) verbunden ist und so ausgebildet ist, daß er ein phasenverschobenes Schwingungssignal erzeugt;
- einen elektromagnetischen Wandler (10) mit einer mit dem Oszillator (1) verbundenen Anregungsspule (3) und zwei wechselseitig miteinander verbundenen Erfassungsspulen (4, 5), die magnetisch mit der Anregungsspule gekoppelt sind und so ausgebildet sind, daß sie ein Differenzsignal erzeugen, wenn ein Gegenstand durch den Wandler (10) hindurchgeführt wird;
- einen ersten Detektor (7A), der mit den Erfassungsspulen (4, 5) und dem Oszillator (1) verbunden ist und so ausgebildet ist, daß er ein erstes analoges Meßsignal erzeugt, das diejenige Komponente des Differenzsignals repräsentiert, die in Phase mit dem Schwingungsbasissignal ist; und
- einen zweiten Detektor (7B), der mit den Erfassungsspulen (4, 5) und dem Phasenschieber (8) verbunden ist und so ausgebildet ist, daß er ein zweites analoges Meßsignal erzeugt, das diejenige Komponente des Differenzsignals repräsentiert, die in Phase mit dem phasenverschobenen Schwingungssignal ist.

## Revendications

1. Détecteur pour détecter des matières étrangères dans un objet comprenant :
un moyen (1 à 10) pour fournir un couple de signaux analogiques à deux dimensions représentant les paramètres électromagnétiques d'un objet ;
un moyen (11, 12) pour convertir respectivement lesdits signaux analogiques en une première et une seconde séries valeurs numériques ;
un moyen (14, 15) sensible auxdites deux séries de valeurs numériques pour déterminer des valeurs représentatives respectives X et Y ; et
un moyen de calcul (15) pour effectuer un calcul sur la base d'une équation à discriminant afin de déterminer si les valeurs représentatives X et Y concordent avec les conditions exprimées, par ce moyen, pour l'objet, caractérisé en ce que ladite équation est la suivante : 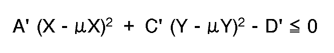 où les coefficients A', C', D', µX et uY sont des valeurs sélectionnées de manière appropriée pour l'objet.

2. Détecteur selon la revendication 1, dans lequel le moyen de conversion (11, 12) est capable de fournir une pluralité d'ensembles de premières et secondes valeurs numériques, chaque ensemble étant produit en réponse à des signaux analogiques représentatifs des paramètres électromagnétiques d'un échantillon respectif dudit objet ; dans lequel : 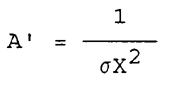 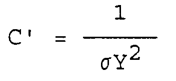 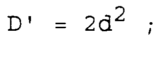 et dans lequel :
uX et µY sont, respectivement, les moyennes des valeurs représentatives X et Y pour les échantillons ; et
aX et aY sont, respectivement, les valeurs d'écart-type de X et Y pour les échantillons ;
le détecteur comprenant, de plus, un moyen (15) pour obtenir les valeurs desdits coefficients uX et uY, en même temps que les coefficients A', C' et D', à partir desdits ensembles de premières et secondes valeurs numériques et d'une valeur d sélectionnée de manière appropriée pour ledit objet.

3. Détecteur selon la revendication 1 ou la revendication 2, comprenant, de plus :
un moyen (15, 25) permettant le stockage et la récupération d'un ensemble sélectionné parmi les ensembles de coefficients de référence pour ladite équation, chaque ensemble étant associé à un type respectif d'objet.

4. Détecteur selon la revendication 3, dans lequel ledit moyen permettant le stockage permet, de plus, le stockage d'un code associé au type d'objet concerné par les coefficients, permettant, par ce moyen, de récupérer ultérieurement lesdites données en entrant ledit nombre de code.

5. Détecteur selon l'une quelconque des revendications précédentes, comprenant, de plus :
un moyen (50) pour produire un signal de passage tandis que ledit objet est en train de passer dans une zone prédéterminée, pendant laquelle lesdits signaux analogiques sont fournis ; et
un moyen (15) pour obliger lesdites valeurs représentatives X et Y à être respectivement déterminées à partir desdites première et seconde séries de valeurs numériques pendant que ledit signal de passage est produit.

6. Détecteur selon la revendication 5, dans lequel ledit moyen de production (1 à 10) est conçu de telle façon que les signaux analogiques adoptent chacun des valeurs qui diffèrent dans un premier sens d'une valeur initiale lorsque l'objet traverse une première partie de son trajet et qui diffèrent dans un second sens, opposé, de la valeur initiale lorsque l'objet traverse une seconde partie de son trajet, et dans lequel ladite zone prédéterminée correspond à l'une desdites parties du trajet de l'objet.

7. Détecteur selon l'une quelconque des revendications précédentes, comprenant un moyen (15, 25) pour stocker une pluralité d'ensembles de valeurs de référence, chaque ensemble étant relatif à un type respectif d'objet, ledit moyen (15, 25) permettant la récupération de chaque ensemble en réponse à l'entrée d'un code respectif.

8. Détecteur selon l'une quelconque des revendications précédentes, dans lequel le moyen de production (1 à 10) comprend :
un oscillateur (1) pour produire un signal périodique de base ;
un déphaseur (8) relié audit oscillateur (1) et conçu pour fournir un signal périodique déphasé ;
un transducteur électromagnétique (10) comprenant une bobine d'excitation (3) reliée audit oscillateur (1), et deux bobines de détection interconnectées (4, 5) couplées magnétiquement à ladite bobine d'excitation et conçues pour produire un signal différentiel entre elles lorsqu'un objet passe dans ledit transducteur (10) ;
un premier détecteur (7A) relié auxdites bobines de détection (4, 5) et audit oscillateur (1) et conçu pour produire un premier signal analogique détecté représentant la composante dudit signal différentiel en phase avec ledit signal périodique de base ; et
un second détecteur (7B) relié auxdites bobines de détection (4, 5) et audit déphaseur (8) et conçu pour produire un second signal analogique détecté représentant la composante dudit signal différentiel en phase avec ledit signal périodique déphasé.
